# FASCICULE DE BREVET EUROPEEN

(11) **EP 3 340 065 B1**
(45) Date de publication et mention de la délivrance du brevet: **04.11.2026**
(21) Numéro de dépôt: 17205849.7
(22) Date de dépôt: 07.12.2017
(51) Int. Cl.: G06F 17/10, G06F 18/2137

(54) **PROCEDE DE DETERMINATION DE L'ETAT D'UN SYSTEME, PROCEDE DE DETERMINATION D'UNE METHODE DE PROJECTION OPTIMALE ET DISPOSITIF METTANT EN OEUVRE LESDITS PROCEDES**
VERFAHREN ZUR BESTIMMUNG DES ZUSTANDS EINES SYSTEMS, VERFAHREN ZUR BESTIMMUNG EINES OPTIMALEN PROJEKTIONSVERFAHRENS UND VORRICHTUNG ZUR UMSETZUNG DIESER VERFAHREN
METHOD FOR DETERMINING THE STATE OF A SYSTEM, METHOD FOR DETERMINING AN OPTIMAL PROJECTION METHOD AND DEVICE IMPLEMENTING SAID METHODS

(30) Priorité: 21.12.2016 FR 1663011
(43) Date de publication de la demande: 27.06.2018
(73) Titulaire: Commissariat à l'Energie Atomique et aux Energies Alternatives, 75015 Paris (FR)
(72) Inventeur: Lespinats, Sylvain, 73100 AIX-LES-BAINS (FR)
(74) Mandataire: Cabinet Camus Lebkiri

(56) Documents cités:
- WO-A1-2011/047889
- WO-A2-2011/048219

## Description

### DOMAINE TECHNIQUE DE L'INVENTION

Le domaine technique de l'invention est celui de la mesure de l'état d'un système.

La présente invention concerne un procédé de détermination de l'état d'un ensemble de batteries parmi une pluralité d'états et en particulier un procédé de détermination de l'état d'un ensemble de batteries parmi une pluralité d'états utilisant une projection non linéaire. L'invention concerne également un procédé de détermination d'une méthode de projection optimale correspondante.

### ARRIERE-PLAN TECHNOLOGIQUE DE L'INVENTION

Dans de nombreux domaines technologiques, il est parfois nécessaire d'analyser un grand nombre de mesures d'une grandeur physique d'un système afin de les associer à différents états dudit système. Chaque mesure d'une grandeur physique d'un système pouvant être associée à un état dudit système, on peut alors s'interroger sur l'organisation spatiale de ces états.

Cependant, dans certains cas, la grandeur physique mesurée ne peut être représentée que dans un espace ayant un grand nombre de dimensions. On peut par exemple citer le cas de la reconnaissance d'expressions du visage, de la reconnaissance de caractères manuscrits ou bien encore le suivi de batteries à l'aide d'enregistrements sonores. Compte tenu de ce nombre élevé de dimensions, on est souvent amené à projeter lesdites valeurs dans un espace de plus petites dimensions afin d'en faciliter l'analyse et de pouvoir associer plus aisément chaque valeur mesurée à un état du système. On parle alors parfois de « cartographie » des états du système. Un grand nombre de méthodes existent dans ce cadre ; elles sont généralement regroupées sous le terme de positionnement multidimensionnel (ou « Multidimensionnal scaling » en anglais). De manière générale, une telle projection est relativement gourmande en termes de ressources de calcul, mais cela ne pose en général pas de problème étant donné que cette dernière n'est mise en œuvre qu'une seule fois lorsque l'on cherche à analyser les mesures a posteriori.

En revanche, si l'on cherchait à déduire l'état d'un système par une nouvelle mesure de la grandeur physique de référence à travers ce type de solutions, il serait nécessaire de projeter cette valeur mesurée dans l'espace de plus petites dimensions avant de pouvoir associer la valeur mesurée à un état du système. Or, de manière générale, les méthodes de projection employées ne permettent pas de projeter une valeur unique issue d'une nouvelle mesure, mais nécessitent au contraire de reprendre l'ensemble des valeurs de la grandeur physique mesurée (les valeurs d'apprentissage et la ou les valeurs nouvellement mesurées) afin de pouvoir effectuer une nouvelle projection. Compte tenu de la ressource en calcul nécessaire pour une telle opération, il est de manière générale difficile d'effectuer le suivi, par exemple en temps réel, d'un système en utilisant une technique de projection. Ainsi, ces méthodes sont cantonnées à l'exploration de données passées ; et ne sont que très rarement utilisées dans d'autres cas de figure. Afin de réduire la complexité de l'étape de projection d'une nouvelle valeur mesurée, des techniques spécifiques à certaines méthodes de projection permettent de projeter un point unique sur la carte résultante. Mais de par leur rattachement à une méthode de projection spécifique, elles ne sont pas polyvalentes.

WO 2011/047889 A1 concerne une méthode et un système pour évaluer la classe d'une donnée de test dans un espace métrique d'origine, chaque donnée appartenant à au moins une classe regroupant plusieurs données. La méthode comporte une étape de mise en relation de la donnée de test avec les projections des données du jeu d'apprentissage, la classe la plus probable de la donnée de test étant la classe des projections des données du jeu d'apprentissage en relation avec la donnée de test.

WO 2011/048219 A2 concerne une méthode et un système pour évaluer la classe d'une donnée de test dans un espace de données de dimension D où D > 3, chaque donnée appartenant à au moins une classe regroupant plusieurs données. La méthode comporte une étape de projection d'un jeu de données de référence de l'espace de données dans un espace de dimension Q où Q < D, la classe de chaque donnée de référence étant connue. La méthode comporte également une étape de calcul d'une mesure de similarité de la donnée de test à chacune des données de référence. La méthode comporte également une étape de partitionnement de l'espace de projection en une pluralité de régions disjointes contenant chacune la projection d'une et une seule donnée de référence. La méthode comporte enfin une étape d'évaluation de la classe de la donnée de test, cette classe étant évaluée comme étant la même classe qu'une des données de référence contenue dans une des régions contenant les données de référence les plus proches de la donnée de test au sens de la mesure de similarité.

Il existe donc un besoin d'une méthode de projection des données qui permettent d'associer un point de mesure à des points de référence sans avoir à projeter l'ensemble des points pour chaque nouvelle mesure. De plus, il existe un besoin qu'une telle méthode fonctionne de la même façon, quelles que soient la projection et la méthode utilisées pour l'obtenir.

### RESUME DE L'INVENTION

L'invention offre une solution aux problèmes évoqués précédemment, en ayant recours à un premier maillage dit maillage de projection et à un deuxième maillage, dit maillage d'origine, en bijection avec le maillage de projection.

Pour cela, un premier aspect de l'invention concerne un procédé de détermination de l'état d'un ensemble de batteries parmi une pluralité d'états. Le procédé selon un premier aspect de l'invention comprend :
les étapes telles que détaillées dans la revendication 1.

Ainsi, à l'issue du procédé selon un premier aspect de l'invention, l'état du ensemble de batteries est connu sans qu'il soit nécessaire d'avoir recours à une méthode de projection non linéaire pour le point correspondant à la valeur acquise. Le fait de ne pas avoir recours à une projection non linéaire permet de pouvoir réaliser le suivi en temps réel d'un ensemble de batteries sans pour autant avoir recours à une forte puissance de calcul. Un tel résultat apparait inatteignable avec un procédé selon l'état de la technique étant donné que ce dernier aurait recours à une étape de projection non linéaire consommatrice en termes de puissance de calcul et donc beaucoup plus longue à mettre en œuvre, et ce pour chaque nouvelle mesure acquise. Il en résulte également un procédé de détermination de l'état d'un ensemble de batteries consommant une énergie moins importante qu'avec les procédés de l'état de l'art antérieur, les ressources de calcul utilisées étant moindres. Cet avantage technique permet notamment de pouvoir considérer l'utilisation d'un tel procédé dans de l'électronique dite embarquée.

Outre les caractéristiques qui viennent d'être évoquées dans le paragraphe précédent, le procédé selon un premier aspect de l'invention peut présenter une ou plusieurs caractéristiques complémentaires parmi les suivantes, considérées individuellement ou selon toutes les combinaisons techniquement possibles. Avantageusement, l'étape de projection orthogonale d'un point associé à une valeur acquise sur le maillage d'origine comprend :
- une sous étape de projection orthogonale dudit point sur chaque maille du maillage d'origine, chaque projection étant associée à une erreur ; et
- une sous-étape de sélection de la maille pour laquelle l'erreur associée à la projection est la plus faible, dite maille d'origine.

Avantageusement, chaque maille est associée à un coefficient de pondération, ledit coefficient de pondération étant fonction de la densité des points issus de l'étape de projection non linéaire dans l'espace de projection, l'erreur associée à la projection dans une maille étant pondérée par le coefficient de pondération associée à ladite maille lors de la sous-étape de sélection de la maille pour laquelle l'erreur associée à la projection est la plus faible.

Ainsi, la sélection de la maille d'origine tient compte de la densité de points dans l'espace de projection et les projections associées à des zones vides de l'espace de projection sont pénalisées.

Avantageusement, l'étape de détermination de la position de l'image du point associé à la valeur acquise dans le maillage de projection comprend :
- une sous étape de sélection d'une maille du maillage de projection, dite maille de projection, ladite maille de projection étant la maille du maillage de projection associée à la maille d'origine ;
- une sous-étape de détermination de la position de l'image du point associé à la valeur acquise dans la maille de projection, ladite détermination étant effectuée en fonction de la position de la projection orthogonale dudit point sur la maille d'origine.

Avantageusement, les simplexes de la maille de projection sont tous identiques et réguliers, et la longueur de leur côté est définie par l'utilisateur. Ainsi, la qualité de la prévision de la méthode peut être modulée, cette dernière tendant à croitre (ainsi que le temps de calcul) avec la décroissance de la longueur choisie.

Avantageusement, au moins un point associé à une valeur acquise projeté lors de l'étape de projection orthogonale est choisi parmi une deuxième partie des points de la pluralité de points distincte de la partie projetée non linéairement. Ainsi, comme nous le verrons dans la suite, il est possible d'évaluer une méthode de projection non linéaire donnée.

Avantageusement, au moins un point associé à une valeur acquise projeté lors de l'étape de projection orthogonale est associé à une valeur acquise lors d'une deuxième étape d'acquisition distincte de la première étape d'acquisition. Ainsi, il est possible de déterminer l'état d'un système à partir de valeurs acquises lors d'une deuxième étape d'acquisition.

Avantageusement, chaque état du système peut être associé à une classe d'états parmi une pluralité de classes d'états, chaque valeur acquise lors de la première étape d'acquisition d'une pluralité de valeurs est associée à une classe d'états connue, le procédé comprenant en outre une étape de détermination de classe d'états du système par comparaison entre la position de l'image du point associée à la valeur acquise dans l'espace de projection et la position des points projetés dans ledit espace de projection lors de l'étape de projection non linéaire. Ainsi, lorsque le système peut adopter plusieurs classes d'états, le procédé selon un premier aspect de l'invention permet de déterminer l'état du système, mais également la classe d'états associée audit état.

Avantageusement, la méthode de projection non linéaire utilisée lors de l'étape de projection non linéaire est une méthode de projection non linéaire supervisée. Cela permet notamment d'augmenter la cohérence entre les positions des points et la classe d'états dans l'espace de projection issu de l'étape de détermination de la position de l'image du point associé à la valeur acquise.

Un deuxième aspect de l'invention concerne un procédé de détermination de la méthode de projection la plus adaptée à un ensemble de batteries caractérisé en ce qu'il comprend, pour chaque méthode de projection non linéaire d'une pluralité de méthodes de projection non linéaire une étape d'évaluation de ladite méthode comprenant :
- une sous étape de mise en œuvre d'un procédé de détermination de l'état d'un ensemble de batteries selon un premier aspect de l'invention, la pluralité de valeurs d'une grandeur physique de référence du ensemble de batteries considérée lors de cette mise en œuvre étant identique pour chaque méthode de projection et l'étape de projection non linéaire étant réalisée à l'aide de la méthode de projection non linéaire considérée ;
- une sous étape d'évaluation de la méthode de projection non linéaire au moyen d'un critère K dont la valeur dépend de la position d'au moins un point image obtenu dans l'espace de projection lors de la mise en œuvre du procédé de détermination de l'état d'un ensemble de batteries.

De plus le procédé selon un deuxième aspect de l'invention comprend une étape de détermination de la méthode la plus adaptée parmi la pluralité de méthodes de projection selon le critère K.

Ainsi, il est possible de déterminer la méthode de projection la plus adaptée à un ensemble de batteries donnée. Il est important de noter ici qu'une telle comparaison entre les résultats obtenus par différentes méthodes de projection non linéaire n'est impartiale que parce que lesdites méthodes ne sont pas utilisées pour projeter les points associés aux valeurs de la deuxième pluralité de valeurs dans l'espace de projection. Au contraire, la méthode de projection utilisée pour ces points-là est une méthode de projection orthogonale associée à un report de positions indépendant de la méthode de projection que l'on cherche à évaluer (réalisé lors de l'étape de mise en œuvre d'un procédé selon un premier aspect de l'invention). C'est cette indépendance qui permet d'effectuer une comparaison entre différentes méthodes de projection de manière impartiale. Ceci n'est rendu possible que par les particularités techniques du procédé de détermination de la méthode de projection la plus adaptée à un système physique donné selon l'invention.

Un troisième aspect de l'invention concerne un dispositif de mesure de l'état d'un ensemble de batteries comprenant un moyen de calcul et un ou plusieurs capteurs configurés pour acquérir une pluralité de valeurs d'une grandeur physique de référence du ensemble de batteries et transmettre lesdites valeurs au moyen de calcul. De plus le moyen de calcul est configuré pour mettre en œuvre un procédé selon un premier aspect de l'invention ou un deuxième aspect de l'invention.

### BREVE DESCRIPTION DES FIGURES

Les figures sont présentées à titre indicatif et nullement limitatif de l'invention.
- La figure 1 montre un ordinogramme d'un premier mode de réalisation d'un procédé selon un premier aspect de l'invention.
- La figure 2 montre un ordinogramme d'un deuxième mode de réalisation d'un procédé selon un premier aspect de l'invention.
- Les figures 3A et 3B montrent une projection orthogonale d'un point de l'espace d'origine dans une maille du maillage d'origine dans un troisième mode de réalisation d'un procédé selon un premier aspect de l'invention.
- La figure 4 montre un ordinogramme d'un quatrième mode de réalisation d'un procédé selon un premier aspect de l'invention.
- La figure 5 montre un ordinogramme d'un cinquième mode de réalisation d'un procédé selon un premier aspect de l'invention.
- La figure 6 montre une représentation schématique d'un ensemble de batteries sur lequel est appliqué un procédé selon un premier aspect de l'invention.
- La figure 7 montre les projections de points associés à une valeur physique de référence dans l'espace de projection obtenues par une méthode de projection non linéaire et venant réaliser une cartographie des états d'un système.
- La figure 8 montre l'image d'un point associé à une valeur acquise dans la cartographie des états d'un système selon l'invention.
- La figure 9 montre des projections de points associées à une valeur physique de référence dans l'espace de projection obtenues par projection non linéaire ainsi que les classes d'états qui leur sont associées.

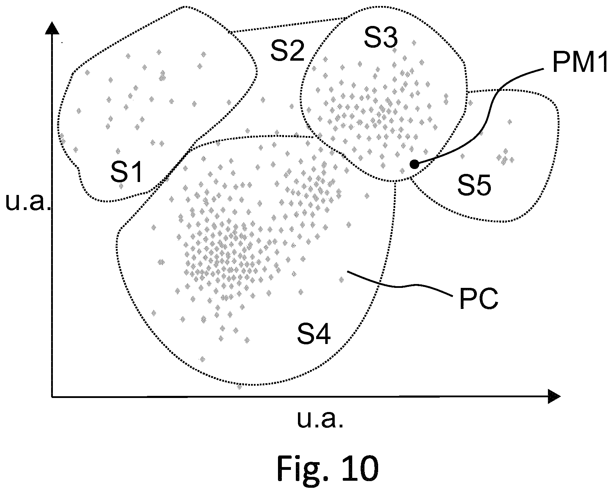

- La figure 10 montre l'image d'un point associé à une valeur acquise dans la cartographie des états du système faisant apparaitre les classes d'états dudit système.

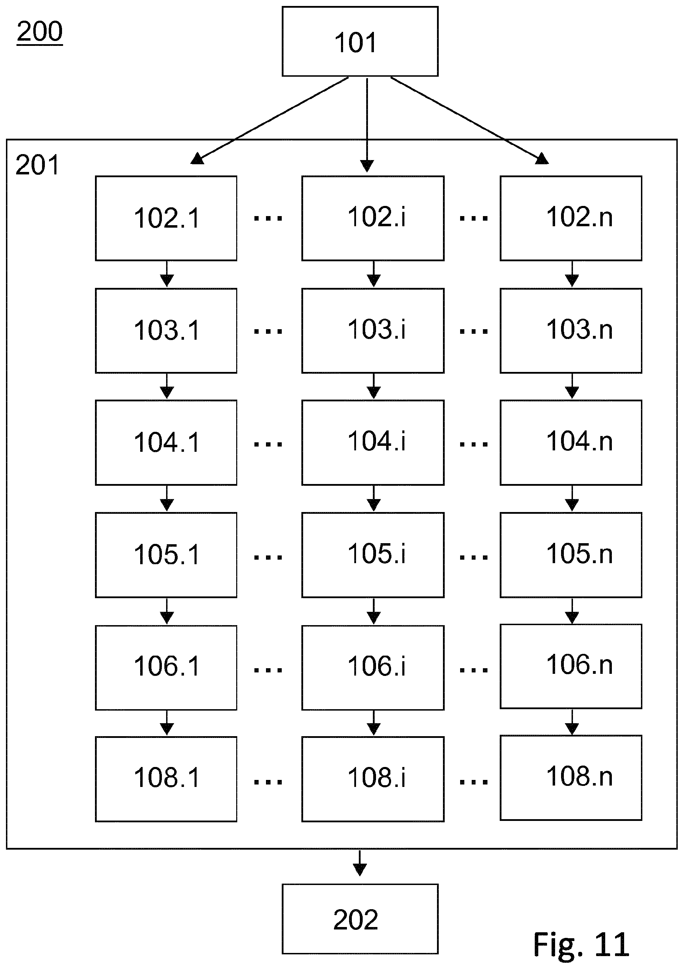

- La figure 11 montre un ordinogramme d'un mode de réalisation d'un procédé selon un deuxième aspect de l'invention.

### DESCRIPTION DETAILLEE D'AU MOINS UN MODE DE REALISATION DE L'INVENTION

Sauf précision contraire, un même élément apparaissant sur des figures différentes présente une référence unique.

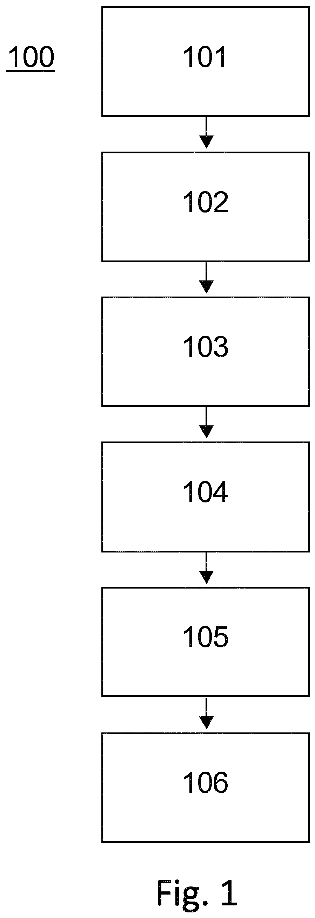

Dans un premier mode de réalisation selon un premier aspect de l'invention illustré à la figure 1, l'invention concerne un procédé 100 de détermination de l'état d'un ensemble de batteries parmi une pluralité d'états. Le procédé comprend une étape d'acquisition 101 d'une pluralité de valeurs d'une grandeur physique de référence du ensemble de batteries correspondant à une pluralité de points dans un espace d'origine, chaque valeur de la pluralité de valeurs étant associée à un point de la pluralité de points et à un état du système. On entend par « grandeur physique de référence d'un ensemble de batteries » une grandeur physique dont la valeur permet, à elle seule, de déterminer l'état d'un ensemble de batteries.

Cette grandeur physique peut être simple (par exemple la fréquence ou l'amplitude associée à un son) ou composite (par exemple la fréquence et l'amplitude associée à un son).

Le procédé selon un premier aspect de l'invention comprend en outre une étape 102 de projection non linéaire d'au moins une partie des points de la pluralité de points, dite partie projetée non linéairement, dans un espace de projection, cet espace de projection étant en bijection avec une sous-variété de l'espace d'origine, chaque point dans l'espace de projection ainsi obtenu étant associé à un état de la pluralité d'états du ensemble de batteries. Autrement dit, chaque point de l'espace de projection est associé à un unique état du ensemble de batteries de sorte à obtenir une cartographie des différents états dudit système. Ainsi, la dimension de l'espace d'origine est strictement supérieure à la dimension de l'espace de projection. Donc, si l'espace d'origine est de dimension deux, alors l'espace de projection est de dimension un. De même, si l'espace d'origine est de dimension trois alors l'espace de projection est au maximum de dimension deux. Dans un mode de réalisation, l'espace d'origine est au moins de dimension trois.

La méthode de projection utilisée lors de cette étape 102 de projection étant une méthode de projection non linéaire, la projection est nécessairement effectuée une fois la pluralité de valeurs de la grandeur physique de référence acquise. Autrement dit, si la projection est effectuée puis qu'une nouvelle valeur est acquise, la pluralité de valeurs doit à nouveau être projetée. Le choix de la méthode de projection non linéaire utilisée dépend notamment du système dont on cherche à déterminer l'état et de la grandeur physique mesurée pour la détermination de cet état. On peut par exemple citer la méthode metrics MDS (pour Metric Multi Dimensional Scaling en anglais), la méthode ISOMAP (pour Isometric Mapping en anglais), la méthode CCA (pour Curvilinear Component Analysis en anglais), la méthode non-metrics MDS (pour Non-Metric Multi Dimensional Scaling en anglais).

Les points de référence obtenus à l'issue de ces deux étapes sont destinés à être comparés à d'autres valeurs de la grandeur physique de référence. Il est donc important de pouvoir ajouter des points dans l'espace de projection afin de permettre ladite comparaison. Cependant, comme cela a été dit précédemment, un tel ajout nécessiterait normalement de projeter à nouveau l'ensemble des points associés aux valeurs de la grandeur physique de référence acquises étant donné que la méthode de projection utilisée est une méthode de projection non linéaire. Afin de ne pas avoir à nouveau recours à une méthode de projection non linéaire, le procédé de détermination de l'état d'un ensemble de batteries selon un premier aspect de l'invention a recours à un premier maillage, dit maillage de projection et un deuxième maillage, dit maillage d'origine. Plus particulièrement, le procédé de détermination de l'état d'un système selon l'invention permet de projeter un nouveau point de l'espace d'origine vers l'espace de projection à l'aide d'un maillage de projection situé dans l'espace de projection et d'un maillage d'origine situé dans l'espace d'origine.

Pour cela, le procédé comporte une étape 103 de création d'un premier maillage dans l'espace de projection, dit maillage de projection, les mailles dudit maillage étant des simplexes, et une étape 104 de création d'un deuxième maillage, dans l'espace d'origine, dit maillage d'origine, en bijection avec le maillage de projection. Autrement dit, chaque maille du maillage de projection est associée à une maille du maillage d'origine. Il est important de noter ici que les mailles du maillage de projection étant des simplexes, elles sont de même dimension que l'espace de projection. Déterminer la position d'un point dans ledit maillage revient donc à déterminer la position dudit point dans ledit espace. Dans un mode de réalisation, les simplexes sont tous identiques et réguliers ; la longueur de leur côté est définie par l'utilisateur, la qualité de la prévision de la méthode tendant à croitre (ainsi que le temps de calcul) avec la décroissance de la longueur choisie. Dans un mode de réalisation, afin de créer le maillage d'origine en bijection avec le maillage de projection, la position de chaque sommet de chaque maille du maillage d'origine dans l'espace d'origine est déterminée, dimension par dimension, en interpolant (par exemple au moyen de la méthode des voisins naturels telle que décrite dans le document *"*A brief description of natural neighbor interpolation (Chapter 2)", In V. Barnett. Interpreting Multivariate Data. Chichester: John Wiley. pp. 21-36 (1981) de R. Sibson) la position desdits sommets dans l'espace d'origine en fonction de leur position dans l'espace de projection. Autrement dit, pour chaque sommet de maille du maillage de projection, on détermine la position d'un sommet d'un simplexe dans l'espace d'origine en fonction des positions des valeurs acquises (de référence) dans l'espace d'origine dont les projections sont les plus proches dudit sommet dans l'espace de projection et de la distance qui les séparent dudit sommet dans l'espace de projection. Chaque point de référence de l'espace de projection est alors associé par construction à un sommet du maillage de l'espace d'origine. Ces points de référence peuvent alors être considérés comme des sommets de mailles dans l'espace d'origine, chaque maille étant associée à une maille de l'espace de projection. Le maillage dans l'espace de projection ainsi construit est en bijection avec le maillage de l'espace d'origine.

Les étapes du procédé selon un premier aspect de l'invention qui viennent d'être décrites permettent notamment :
- d'obtenir des points de références dans un espace d'origine et de les projeter non linéairement dans un espace de projection afin d'obtenir une cartographie des états du ensemble de batteries dans l'espace de projection ;
- de mettre en place un maillage de projection dans l'espace de projection, ainsi qu'un maillage d'origine dans l'espace d'origine qui en soit le miroir de sorte qu'il existe une bijection entre les sommets des simplexes dans les deux espaces, cette bijection pouvant être exploitée afin de déterminer la position de l'image d'un point de l'espace d'origine dans l'espace de projection.

Afin de tirer parti de ces deux maillages, le procédé selon un premier aspect de l'invention comporte une étape 105 de projection orthogonale dans le maillage d'origine d'au moins un point associé à une valeur acquise, ledit point n'appartenant pas à la partie projetée non linéairement et une étape 106 de détermination de la position de l'image dudit point dans le maillage de projection en fonction de la position de la projection orthogonale dudit point dans le maillage d'origine, de sorte à obtenir un point, dit point image, dans l'espace de projection et ainsi déterminer l'état du ensemble de batteries. L'état du système peut par exemple être déterminé à l'aide du plus proche voisin dans l'espace de projection, c'est-à-dire en attribuant audit système l'état associé au point de référence dans l'espace de projection le plus proche du point image dans l'espace de projection. De manière plus générale, on pourra avoir recours à la méthode des K plus proches voisins, voire à d'autres méthodes de classification (supervisées ou non supervisées).

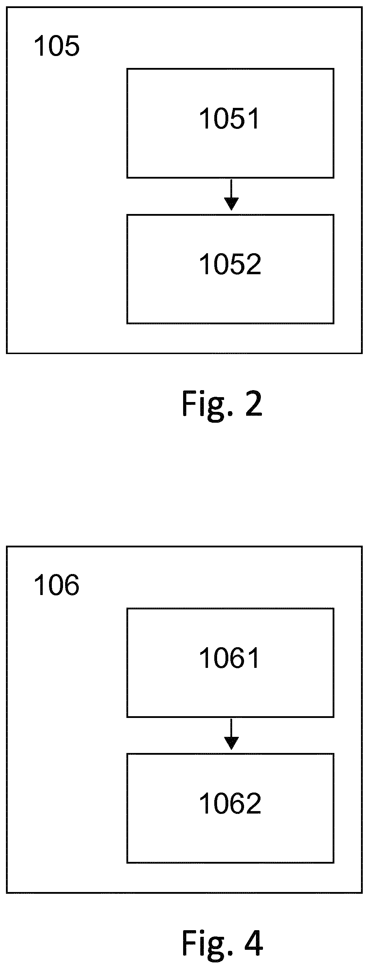

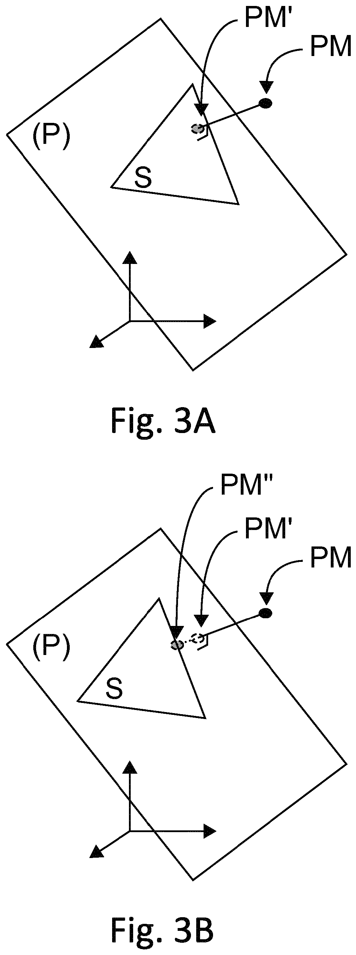

Dans un mode de réalisation illustré à la figure 2, l'étape 105 de projection orthogonale dans le maillage d'origine d'un point associé à une valeur acquise comprend une sous-étape 1051 de projection orthogonale dudit point sur chaque maille du maillage d'origine, chaque projection étant associée à une erreur. Il est possible de distinguer deux situations lors cette projection orthogonale. Dans la première situation illustrée à la figure 3A, la projection PM' du point PM associé à la valeur physique mesurée est située à l'intérieur de la maille S ; dans ce premier cas, la projection PM' est conservée. Dans la deuxième situation illustrée à la figure 3B, la projection PM' du point PM associée à la valeur physique mesurée est située en-dehors de la maille S ; dans ce deuxième cas, la projection PM' obtenue est elle-même projetée orthogonalement sur chacune des arêtes de la maille S et on choisit parmi ces projections la projection PM" générant l'erreur de projection la plus faible. Ainsi, pour chaque point PM dans l'espace d'origine, on obtient une projection PM', PM" dudit point dans une maille du maillage d'origine.

A l'issue de cette étape, on dispose pour chaque maille d'une projection orthogonale PM', PM" de la valeur acquise ainsi que d'une erreur de projection associée. On sélectionne la meilleure projection ou autrement dit, la maille qui correspond à l'erreur de projection la plus faible. Pour cela, l'étape 105 de projection orthogonale dans le maillage d'origine d'un point associé à une valeur acquise comprend également une sous-étape 1052 de sélection de la maille pour laquelle l'erreur associée à la projection orthogonale est la plus faible, dite maille d'origine. Dans ce qui précède, l'erreur de projection associée à une projection peut par exemple être définie comme la distance euclidienne entre la position du point associée à la valeur acquise dans l'espace d'origine et la position du point issu de la projection sur le maillage d'origine dans ce même espace.

Dans un mode de réalisation, chaque maille est associée à un coefficient de pondération, ledit coefficient de pondération étant fonction de la densité des points issus de l'étape de projection non linéaire dans l'espace de projection, l'erreur associée à la projection dans une maille étant pondérée par le coefficient de pondération associée à ladite maille lors de la sous-étape de sélection de la maille pour laquelle l'erreur associée à la projection est la plus faible. Autrement dit, si le coefficient de pondération de la maille associé à la projection est faible, alors l'erreur associée à ladite projection est majorée. Inversement, si le coefficient de pondération de la maille associé à la projection est élevé, alors l'erreur associée à la projection est minorée. Ainsi, la sélection de la maille d'origine tient compte de la densité de points dans l'espace de projection et les projections associées à des zones vides de l'espace de projection sont pénalisées.

Le coefficient de pondération pourra par exemple être calculé à l'aide d'une fonction de type RBF (pour Radial Basis Function en anglais), mais d'autres méthodes de calcul peuvent être envisagées. Dans un exemple de réalisation, la pondération peut prendre la forme suivante : ${P}^{densit é} \left({t}_{l}^{original}\right) = \frac{{\sum }_{m = 1}^{3} {P}^{voisin} \left({t}_{l}^{original}\left(m\right)\right)}{{\sum }_{n = 1}^{N} {\sum }_{m = 1}^{3} {P}^{voisin} \left({t}_{n}^{original}\left(m\right)\right)}$ où ${\left\{{t}_{l}^{original}\right\}}_{l ∈ \left\{1,2,…,N\right\}}$ est l'ensemble des *N* simplexes qui définissent le maillage dans l'espace d'origine. Pour un simplexe ${t}_{l}^{original}$ donné, ${t}_{l}^{original} \left(m\right)$*,* où m peut prendre la valeur 1, 2 ou 3, est un sommet du simplexe. ${P}^{voisin} \left({t}_{l}^{original}\left(m\right)\right)$ est la probabilité pour le sommet ${t}_{l}^{original}$ d'être voisin d'une donnée déjà projetée. Dans le cas d'un espace de projection bidimensionnel, N = 3. L'estimation de ${P}^{voisin} \left({t}_{l}^{original}\left(m\right)\right)$ peut être similaire à celle employée dans le document Hinton, G. E., & Roweis, S. T. (2002). Stochastic neighbor embedding, Advances in neural information processing systems (pp. 833-840) par exemple: ${P}^{voisin} \left(α\right) = \frac{exp \left(-max{\left(1; \frac{{min}_{1 ∈ {S}_{L}} \left(d\left({x}_{i}, α\right)\right.}{σ}\right)}^{2}\right)}{{\sum }_{β ∈ {\left\{{x}_{i}\right\}}_{i ∈ {S}_{L}}} exp \left(-max{\left(1; \frac{{min}_{1 ∈ {S}_{L}} \left(d\left(β, α\right)\right)}{σ}\right)}^{2}\right)}$

Dans ce cas, d(A,B) est la distance euclidienne entre les points A et B dans l'espace de projection, S_{L} désigne l'ensemble de la pluralité de points projetés au cours de l'étape 102, et *σ* = max(2 × *dₜ,* Δ*dₖ*) où *dₜ* est la taille des arêtes du simplexe de la carte (le simplexe étant régulier par construction) et Δ*dₖ* est la distance moyenne d'un point projeté dans l'espace de projection à son k^{ième} plus proche voisin.

Dans un mode de réalisation illustré à la figure 4, l'étape 106 de détermination de la position de l'image du point associé à la valeur acquise dans le maillage de projection comprend une sous étape 1061 de sélection d'une maille du maillage de projection, dite maille de projection, ladite maille de projection étant la maille du maillage de projection associée à la maille d'origine et une sous-étape 1062 de détermination de la position de l'image du point associé à la valeur acquise dans la maille de projection, ladite détermination étant effectuée en fonction de la position de la projection du point associé à la valeur acquise dans la maille d'origine.

Dans un mode de réalisation, la position de l'image du point associé à la valeur acquise dans la maille de projection associée à la maille d'origine est déterminée à l'aide d'une moyenne pondérée. Plus exactement, on considère tout d'abord la projection du point associé à la valeur considérée dans la maille d'origine. Comme expliqué précédemment, une maille est définie par des sommets. Or, si les sommets sont distincts, il existe un et un seul jeu de pondérations positives dont la somme égale 1 possible pour définir la position de la projection orthogonale du point sur la maille d'origine comme la somme pondérée des sommets de la maille. Ces pondérations sont utilisées pour définir la position de l'image du point associé à la valeur acquise dans l'espace de projection comme la somme pondérée des sommets de la maille associée dans l'espace de projection. En procédant de la sorte, on détermine la position de l'image du point associé à la valeur acquise dans la maille de projection de sorte à obtenir un point, dit point image, dans l'espace de projection en fonction de la position de la projection orthogonale du point associé à la valeur acquise dans la maille d'origine.

Dans un mode de réalisation, au moins un point associé à une valeur acquise projeté lors de l'étape de projection orthogonale est choisi parmi une deuxième partie des points de la pluralité de points distincte de la partie projetée non linéairement. Comme cela sera détaillé dans la suite, cela permet notamment de comparer différentes méthodes de projection non linéaires pour déterminer ensuite la méthode la plus adaptée à un système physique donné.

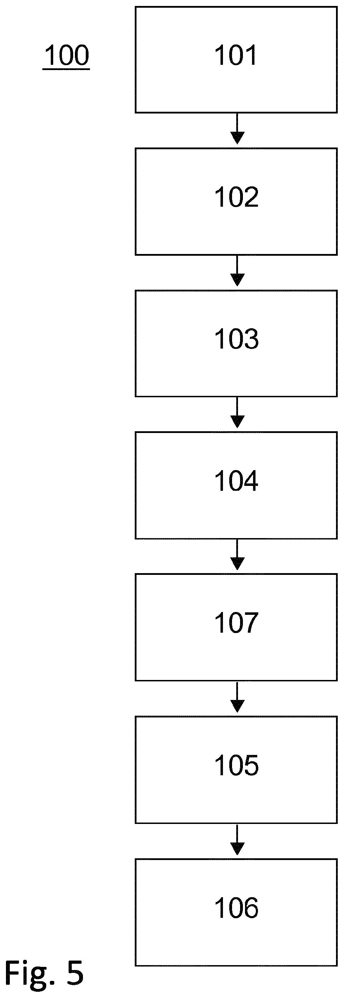

Dans un mode de réalisation alternatif illustré à la figure 5, au moins un point associé à une valeur acquise projetée lors de l'étape de projection orthogonale est associé à une valeur acquise lors d'une deuxième étape 107 d'acquisition distincte de la première étape 101 d'acquisition. C'est notamment le cas lorsque la première étape 101 d'acquisition est réalisée en laboratoire afin d'obtenir les points de référence dans l'espace de projection alors que le ou les points projetés orthogonalement sont issus d'une deuxième étape 107 d'acquisition lorsque le système dont on cherche à déterminer l'état n'est plus dans le laboratoire, mais installé sur un site différent et en cours de fonctionnement.

Dans un mode de réalisation, chaque état du système peut être associé à une classe d'états parmi une pluralité de classes d'états, chaque valeur acquise lors de la première étape 101 d'acquisition d'une pluralité de valeurs étant associée à une classe d'états connue. Autrement dit, on choisit différentes classes d'états du système dont on souhaite pouvoir déterminer la nature par des mesures ultérieures et on effectue une pluralité d'acquisitions de la valeur d'une grandeur physique de référence pour chacune desdites classes d'états. Le procédé comprend en outre une étape de détermination de classe d'états du système par comparaison entre la position du point image dans l'espace de projection et la position des points projetés dans ledit espace de projection lors de l'étape de projection non linéaire.

Dans un mode de réalisation, la méthode de projection non linéaire utilisée lors de l'étape 102 de projection non linéaire est une méthode de projection non linéaire supervisée. Par exemple, la méthode de projection non linéaire est la méthode Classimap. Cela permet notamment d'augmenter la cohérence entre les positions des points et la classe d'états dans l'espace de projection issu de l'étape 106 de détermination de la position de l'image du point associé à la valeur acquise.

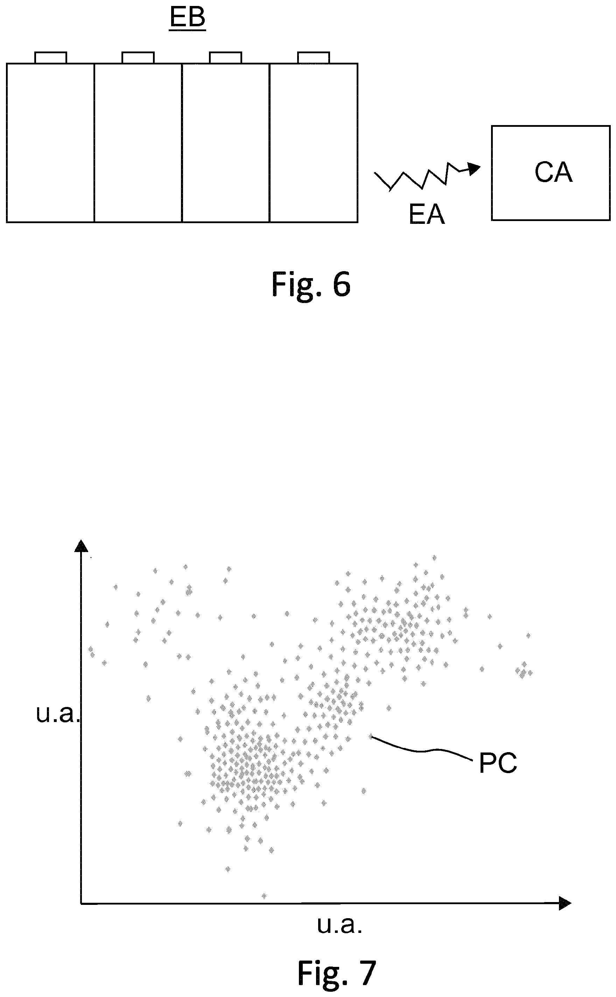

Dans un mode de réalisation illustré à la figure 6, le système prend la forme d'un ensemble de batteries EB, un ensemble de batteries EB pouvant comprendre une ou plusieurs batteries. Le procédé selon un premier aspect de l'invention consiste alors à un procédé de détermination de l'état d'un ensemble de batteries EB. La grandeur physique de référence peut alors consister en une émission acoustique EA. Le procédé de détermination de l'état de l'ensemble de batteries EB comporte donc une étape 101 d'acquisition d'une pluralité d'enregistrement d'émission acoustique EA de l'ensemble de batteries EB, chaque enregistrement étant associé à un point dans un espace d'origine et à un état connu de l'ensemble de batteries. Cet enregistrement acoustique peut par exemple être réalisé à l'aide d'un capteur acoustique CA.

En effet, lorsqu'un ensemble de batteries EB est en fonctionnement, il émet des sons et l'analyse de ces sons permet de déterminer l'état de l'ensemble de batteries EB. Pour cela l'émission acoustique EA mesurée est décomposée à l'aide de séries de Fourrier et chaque mesure est représentée par un point dont les coordonnées sont données par les différentes fréquences mesurées et les amplitudes associées à ces fréquences. Les points ainsi obtenus sont alors situés dans un premier espace de grande dimension. Autrement dit, les émissions acoustiques EA de l'ensemble de batteries EB constituent une valeur physique de référence au sens de l'invention et chaque valeur mesurée de cette grandeur physique de référence est associée à un point dans un espace d'origine de grande dimension.

Le procédé de détermination de l'état de l'ensemble de batteries comporte également une étape 102 de projection d'au moins une partie des points associés auxdits enregistrements dans un espace de projection, cet espace de projection étant en bijection avec une sous-variété de l'espace d'origine, ladite sous-variété pouvant être de dimension deux dans le cas de l'ensemble de batteries EB. De plus chaque point de cet espace de projection est, par construction, associé à un état connu de l'ensemble de batteries EB.

Comme illustré à la figure 7, une fois l'ensemble des points projeté dans l'espace de projection, on obtient une pluralité de points PC dans l'espace des projections, chacun de ces points PC étant associé à un état connu de l'ensemble de batteries EB. Autrement dit une cartographie des états de l'ensemble de batteries EB dans l'espace de projection est réalisée. Dans le cas d'un ensemble de batteries EB, la méthode de projection non linéaire doit de préférence être choisie parmi les méthodes qui préservent les relations de voisinage. Les avantages à utiliser ce type de projection sont notamment détaillés dans le document « Mapping from the neighbourhood network », Neurocomputing, vol. 72 (13-15), pp. 2964-2978.

Le procédé de détermination de l'état d'un ensemble de batteries EB comporte également une étape 103 de création d'un premier maillage dans l'espace de projection, dit maillage de projection, les mailles dudit maillage étant des simplexes. L'espace de projection étant de dimension deux et les mailles étant des simplexes de même dimension, les mailles du maillage de projection se présentent sous la forme de triangles. Le procédé comprend en outre une étape 104 de création d'un deuxième maillage dans l'espace d'origine en bijection avec le maillage de projection, dit maillage d'origine. Ainsi, chaque maille du maillage de projection est associée à une maille du maillage d'origine.

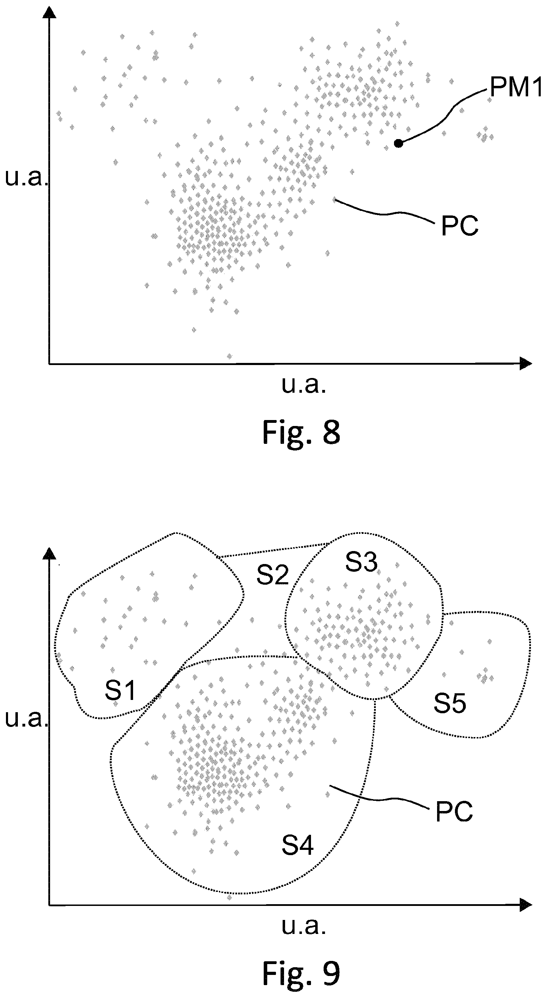

Le procédé comprend également une étape 105 de projection orthogonale d'au moins un point de l'espace d'origine associé à une valeur acquise sur le maillage d'origine, ledit point n'appartenant pas à la partie projetée non linéairement au cours de l'étape 101 et une étape 106 de détermination de la position de l'image du point associé à la valeur acquise sur le maillage de projection en fonction de la position de la projection dudit point sur le maillage d'origine. Comme illustré à la figure 8, à l'issue de cette étape, on obtient un point PM1, dit point image, représentatif de l'état que l'on cherche à déterminer dans l'espace de projection. Il est donc possible de comparer la position de ce point PM1 avec les différents points PC associé à des états connus de l'ensemble de batteries EB afin de déterminer l'état du système. Ainsi, à partir de ces deux maillages, il est donc possible de projeter un point associé un enregistrement acoustique EA dans le maillage d'origine, d'obtenir une image dudit point, dit point image, dans l'espace de projection et d'en déduire l'état de l'ensemble de batteries EB.

Dans un mode de réalisation, le point associé à un enregistrement projeté lors de l'étape 105 de projection orthogonale est associé à un enregistrement acquis lors d'une deuxième étape 107 d'acquisition distincte de la première étape d'acquisition. Par exemple, la première étape 101 d'acquisition peut avoir lieu dans un laboratoire où il est possible de connaitre l'état de l'ensemble de batteries EB pour chacun des enregistrements acoustiques acquis. Les enregistrements acquis lors de cette première étape d'acquisition sont utilisés pour réaliser une cartographie des états de l'ensemble de batteries EB dans l'espace de projection. La deuxième étape 107 d'acquisition peut avoir lieu alors que l'ensemble de batteries EB est installé dans un véhicule ou un bâtiment et que son état est à déterminer. Ainsi, il est possible de déterminer l'état de l'ensemble de batteries EB à partir d'un enregistrement acoustique EA sans avoir recours à une méthode de projection complexe et coûteuse en termes de puissance électrique et de temps de calcul alors même que l'ensemble de batteries EB est en cours d'utilisation.

Le fait de ne pas avoir recours à une méthode de projection non linéaire pour la détermination de l'état de l'ensemble de batteries EB à partir d'une deuxième étape d'acquisition permet d'effectuer une détection de leur état en consommant une énergie moins importante qu'avec les procédés de l'état de l'art antérieur, les ressources de calcul utilisées étant moindres. De plus, le procédé selon un premier aspect de l'invention est rapide à mettre en œuvre et permet donc un suivi de l'état de l'ensemble de batteries EB en temps réel. Ceci n'est possible que parce que les étapes nécessitant des ressources de calculs importantes (i.e. la projection non linéaire et la mise en place des maillages d'origine et de projection) ne sont réalisées qu'une seule fois. L'ajout d'un ou plusieurs nouveaux points correspondant à un ou plusieurs enregistrements acoustiques EA réalisés lors d'une ou plusieurs étapes 107 d'acquisition ultérieure pourront quant à eux être associés à un ou des points images dans l'espace des projections à l'aide d'une projection orthogonale associée à un report de moyenne pondérée beaucoup moins exigeants en ressources de calculs.

On entend par « suivi en temps réel » un temps de détermination de l'état de l'ensemble de batteries EB inférieur ou égal au temps caractéristique de l'évolution dudit ensemble. Dans le cas d'un ensemble de batteries EB, on entend par temps réel que l'étape 105 de projection orthogonale et l'étape 106 de détermination de la position de l'image du point associé à la valeur acquise dans l'espace de projection (et donc de l'état de l'ensemble de batteries EB) peuvent être réalisées en un temps inférieur ou égal à la milliseconde. Un tel résultat apparait inatteignable avec un procédé selon l'état de la technique étant donné que ce dernier aurait recours à une étape de projection non linéaire consommatrice en termes de puissance de calcul et donc beaucoup plus longue à mettre en œuvre.

Dans un mode de réalisation illustré à la figure 9, les différents états de l'ensemble de batteries EB sont associés à une pluralité de classe d'états Si. Par exemple, chaque état de l'ensemble de batteries EB peut être associé à une première classe S1 d'états correspondant à la formation de bulles dans l'électrolyte, une deuxième classe S2 d'états correspondant à des craquements dus à la dilatation des métaux des batteries de l'ensemble de batteries EB, etc. Dans la figure 9, cinq états de l'ensemble de batteries EB ont été définis lors de l'étape 101 d'acquisition et sont identifiables au travers d'une première zone S1 représentant une première classe d'états, une deuxième zone S2 représentant une deuxième classe d'états, une troisième zone S3 représentant une troisième classe d'états, une quatrième zone S4 représentant une quatrième classe d'états et une cinquième zone S5 représentant une cinquième classe d'états. Autrement dit, chaque point de référence présent dans l'une de ces zones correspond à un enregistrement acquis lorsque l'ensemble de batteries EB se trouvait dans la classe d'états associée à ladite zone. Le point PM1 associée à une valeur acquise lors d'une deuxième étape d'acquisition est localisé dans la zone associée à la classe d'état S3. À partir de la position du point PM1, il est donc possible de déterminer la classe d'état de l'ensemble de batteries EB à partir d'un enregistrement acoustique EA et cela, sans avoir recours à une nouvelle projection non linéaire.

Il peut être avantageux, dans le but de discriminer de manière plus efficace les états ou classes d'états entre eux dans l'espace de projection de sélectionner une méthode de projection adaptée au système physique auquel on s'intéresse. Pour cela, un deuxième aspect de l'invention concerne un procédé 200 de détermination de la méthode de projection la plus adaptée à un ensemble de batteries.

Le procédé 200 comprend, pour chaque méthode de projection non linéaire d'une pluralité de méthodes de projection non linéaire une étape 201 d'évaluation de ladite méthode de projection comprenant une sous-étape de mise en œuvre d'un procédé de détermination de l'état d'un ensemble de batteries selon un premier aspect de l'invention dans lequel au moins un point associé à une valeur acquise projetée lors de l'étape de projection orthogonale est choisi parmi une deuxième partie des points de la pluralité de points distincte de la partie projetée non linéairement. Cette sous-étape de mise en œuvre est en outre effectuée de sorte que la pluralité de valeurs d'une grandeur physique de référence du ensemble de batteries considérée lors de cette mise en œuvre est identique pour chaque méthode de projection et de sorte que l'étape 102 de projection non linéaire est réalisée à l'aide de la méthode de projection non linéaire considérée.

L'étape 201 d'évaluation de ladite méthode de projection comprend également une sous-étape d'évaluation de la méthode de projection non linéaire au moyen d'un critère K dont la valeur dépend de la position d'au moins un point image obtenu dans l'espace de projection lors de la mise en œuvre du procédé de détermination de l'état d'un ensemble de batteries.

Autrement dit, le procédé 200 selon un deuxième aspect de l'invention comprend une étape 101 d'acquisition d'une pluralité de valeurs d'une grandeur physique de référence du ensemble de batteries correspondant à une pluralité de points dans un espace d'origine, chaque valeur de la pluralité de valeurs étant associée à un point de la pluralité de points et à un état du ensemble de batteries. Il comprend également une étape 201 d'évaluation comportant, pour chaque méthode de projection Pi:
- une étape 102.i de projection non linéaire d'au moins une partie des points de la pluralité de points, dite partie projetée non linéairement, dans un espace de projection, cet espace de projection étant en bijection avec une sous-variété de l'espace d'origine, chaque point dans l'espace de projection ainsi obtenu étant associé à un état de la pluralité d'états du système ;
- une étape 103.i de création d'un premier maillage dans l'espace de projection, dit maillage de projection, les mailles dudit maillage étant des simplexes ;
- une étape 104.i de création d'un deuxième maillage, dit maillage d'origine, en bijection avec le maillage de projection dans l'espace d'origine, de sorte que chaque maille du maillage de projection est associée à une maille du maillage d'origine ;
- une étape 105.i de projection orthogonale sur le maillage d'origine d'au moins un point associé à une valeur acquise, ledit point appartenant à une deuxième partie des points de la pluralité de points distincte de la partie projetée non linéairement ;
- une étape 106.i de détermination de la position de l'image dudit point dans le maillage de projection en fonction de la position de la projection orthogonale dudit point sur le maillage d'origine de sorte à obtenir un point, dit point image, dans l'espace de projection et ainsi déterminer l'état du système ;
- une étape 108.i d'évaluation de la méthode de projection non linéaire au moyen d'un critère K dont la valeur dépend de la position d'au moins un point image obtenu à l'issue de l'étape 106.i de détermination de la position de l'image dudit point.

Le procédé comprend enfin une étape 202 de détermination de la méthode de projection la plus adaptée parmi la pluralité de méthodes de projection selon le critère K attribué à chaque méthode de projection. Ce critère K pourra être choisi parmi les critères classiques d'évaluation, notamment les critères décrits dans le document Lespinats, S., & Aupetit, M. (2011, March), CheckViz: Sanity Check and Topological Clues for Linear and Non-Linear Mappings, In Computer Graphics Forum (Vol. 30, No. 1, pp. 113-125), Blackwell Publishing Ltd.

Il est important de noter ici qu'une telle comparaison entre les résultats obtenus par différentes méthodes de projection non linéaire n'est impartiale que parce que lesdites méthodes ne sont pas utilisées pour projeter les points associés aux valeurs de la deuxième pluralité de valeurs dans l'espace de projection. Au contraire, la méthode de projection utilisée pour ces points-là est une méthode de projection orthogonale associée à un report de positions indépendant de la méthode de projection que l'on cherche à évaluer. C'est cette indépendance qui permet d'effectuer une comparaison entre différentes méthodes de projection de manière impartiale. Ceci n'est rendu possible que par les particularités techniques du procédé de détermination de la méthode de projection la plus adaptée à un système physique donné selon l'invention.

Par ailleurs, on pourra envisager un mode de réalisation dans lequel un procédé selon un deuxième mode de réalisation est mis en œuvre afin de sélectionner une méthode de projection optimale pour un système donné. Une fois cette méthode optimale déterminée, cette dernière peut être utilisée dans un procédé selon un premier aspect de l'invention dans lequel une deuxième étape d'acquisition est effectuée afin de déterminer, à partir d'une ou plusieurs nouvelles mesures de la grandeur physique de référence, l'état du système considéré. Ainsi, le procédé de détermination de l'état d'un système met en œuvre la méthode de projection non linéaire la mieux adaptée audit système lors de l'étape 102 de projection non linéaire.

Il est important de noter que si les différents modes de réalisation ont été illustrés en prenant pour exemple un ensemble de batteries, un procédé selon un premier aspect de l'invention ou un deuxième aspect de l'invention est adapté à tout système nécessitant une projection non linéaire de points relatifs à des mesures.

Par exemple le système ne faisant pas l'objet des revendications peut être relatif au tracé d'un caractère manuscrit. Ce type de problématiques est par exemple classique dans le domaine de la lecture automatique de codes postaux par les agences de transport du courrier ou de chèque par les banques. Dans ce cas-là, chaque état du système correspond à un tracé particulier et la grandeur physique de référence correspond à l'image dudit tracé (la dimension de l'espace d'origine est donc fonction de la résolution de l'image). De plus, les différents états du système peuvent être rattachés à des classes d'état correspondant à différents chiffres (ou lettres) associés à chaque tracé. Par exemple, une première pluralité d'états (donc de tracés) pourra être associée à une première classe d'état (le chiffre 1 par exemple). Le procédé de détermination de l'état d'un système pourra, dans ce cas de figure, constituer, à l'aide d'une méthode de projection non linéaire, une cartographie dans l'espace de projection (par exemple un espace à deux dimensions) des différents états (différents tracés) et des différentes classes d'états (différents chiffres ou lettres) à partir d'une première étape d'acquisition d'une pluralité d'images, chaque image étant associée à un état et à une classe d'états du système. Cette cartographie pourra être utilisée en positionnant un point image dans l'espace de projection associé à un caractère manuscrit au moyen d'une maille d'origine et d'un maillage de projection, ledit point image correspondant à un tracé manuscrit dont la classe d'état est inconnue, et ce afin d'identifier la classe d'état (le chiffre ou la lettre) représenté par ledit tracé. Autrement dit, dans cet exemple de réalisation, un procédé selon un premier aspect de l'invention peut également être mis en œuvre afin d'identifier le chiffre représenté par un tracé à partir d'une photographie dudit tracé et notamment être mis en œuvre par un appareil de tri postal ou un appareil de traitement des chèques bancaires.

Un troisième aspect de l'invention concerne un dispositif de mesure de l'état d'un ensemble de batteries. Le dispositif comprend un moyen de calcul (ou calculateur) et un ou plusieurs capteurs configurés pour acquérir une pluralité de valeurs d'une grandeur physique de référence du système et transmettre lesdites valeurs au moyen de calcul (ou calculateur). De plus le moyen de calcul (ou calculateur) est configuré pour mettre en œuvre un procédé selon un premier aspect de l'invention ou un deuxième aspect de l'invention. Le moyen de calcul peut prendre la forme d'un processeur associé à une mémoire, d'un FPGA (pour Field-Programmable Gate Array en anglais, Circuit Logique Programmable en français) ou d'une carte de type ASIC (pour Application-Specific Integrated Circuit en anglais).

Dans un mode de réalisation selon un troisième aspect de l'invention, le moyen de calcul (ou calculateur) peut adopter au moins deux configurations différentes. Dans une première configuration, le moyen de calcul est configuré pour mettre en œuvre un procédé selon un deuxième aspect de l'invention. Ainsi, dans cette configuration, le dispositif de mesure peut acquérir une première pluralité de valeurs d'une grandeur physique de référence du système et déduire à partir de cette première pluralité de valeurs, quelle méthode de projection non linéaire, parmi une pluralité de méthodes de projection non linéaire, est la plus adaptée audit système physique. Dans une deuxième configuration, le moyen de calcul (ou calculateur) est configuré pour mettre en œuvre un procédé selon un premier aspect de l'invention dans lequel la méthode de projection non linéaire utilisée lors de l'étape 102 de projection non linéaire est la méthode de projection non linéaire la plus adaptée déterminée lorsque ledit dispositif est dans la première configuration.

Autrement dit, le dispositif de mesure selon un troisième aspect de l'invention est mis dans une première configuration afin de déterminer la méthode de projection non linéaire la plus adaptée au système que ledit dispositif est destiné à mesurer ; puis ce dernier est mis dans une deuxième configuration dans laquelle la méthode de projection la plus adaptée est utilisée afin de déterminer l'état dudit système.

## Revendications

1. Procédé (100) de détermination de l'état d'un ensemble de batteries (EB) parmi une pluralité d'états, ledit procédé comprenant :
- une étape (101) d'acquisition d'une pluralité d'enregistrements d'émissions acoustiques (EA) de l'ensemble de batteries (EB), chaque enregistrement étant associée à un point de la pluralité de points dans un espace d'origine et à un état connu de l'ensemble de batteries, ladite association étant obtenue en décomposant les émissions acoustiques à l'aide de séries de Fourier, ledit point dans l'espace d'origine étant obtenu pour chaque enregistrement par des coordonnées données par les différentes fréquences mesurées et les amplitudes associées à ces fréquences ;
- une étape (102) de projection non linéaire d'au moins une partie des points associés auxdits enregistrements, dite partie projetée non linéairement, dans un espace de projection, cet espace de projection étant en bijection avec une sous variété de l'espace d'origine, chaque point dans l'espace de projection ainsi obtenu étant associé à un état connu de l'ensemble de batteries ;
ledit procédé étant **caractérisé en ce qu'**il comporte :
- une étape (103) de création d'un premier maillage dans l'espace de projection, dit maillage de projection, les mailles dudit maillage étant des simplexes ;
- une étape (104) de création d'un deuxième maillage en bijection avec le maillage de projection dans l'espace d'origine, dit maillage d'origine, chaque maille du maillage de projection étant associée à une maille du maillage d'origine ;
- une étape (105) de projection orthogonale sur le maillage d'origine d'au moins un point associé à une valeur acquise, ledit point n'appartenant pas à la partie projetée non linéairement ;
- une étape (106) de détermination de la position de l'image dudit point dans le maillage de projection en fonction de la position de la projection orthogonale dudit point sur le maillage d'origine, de sorte à obtenir un point, dit point image, dans l'espace de projection et, en comparant la position de ce point image avec les points associés aux états connus de l'ensemble de batteries, ainsi déterminer l'état de l'ensemble de batteries.

2. Procédé selon la revendication précédente **caractérisé en ce que** l'étape (105) de projection orthogonale d'un point associé à une valeur acquise sur le maillage d'origine comprend :
- une sous étape (1051) de projection orthogonale dudit point sur chaque maille du maillage d'origine, chaque projection étant associée à une erreur ; et
- une sous-étape (1052) de sélection de la maille pour laquelle l'erreur associée à la projection est la plus faible, dite maille d'origine.

3. Procédé (100) selon la revendication précédente **caractérisé en ce que** chaque maille est associée à un coefficient de pondération, ledit coefficient de pondération étant fonction de la densité des points issus de l'étape de projection non linéaire dans l'espace de projection, l'erreur associée à la projection dans une maille étant pondérée par le coefficient de pondération associé à ladite maille lors de la sous-étape de sélection de la maille pour laquelle l'erreur associée à la projection est la plus faible.

4. Procédé (100) selon l'une des deux revendications précédentes **caractérisé en ce que** l'étape (106) de détermination de la position de l'image du point associé à l'enregistrement d'émissions acoustiques acquis dans le maillage de projection comprend :
- une sous étape (1061) de sélection d'une maille du maillage de projection, dite maille de projection, ladite maille de projection étant la maille du maillage de projection associée à la maille d'origine ;
- une sous-étape (1062) de détermination de la position de l'image du point associé à l'enregistrement d'émissions acoustiques acquis dans la maille de projection, ladite détermination étant effectuée en fonction de la position de la projection orthogonale dudit point sur la maille d'origine.

5. Procédé (100) selon l'une des revendications précédentes **caractérisé en ce qu'**au moins un point associé à un enregistrement d'émissions acoustiques acquis projeté lors de l'étape de projection orthogonale est choisi parmi une deuxième partie des points de la pluralité de points distincte de la partie projetée non linéairement.

6. Procédé (100) selon l'une des revendications 1 à 4 **caractérisé en ce qu'**au moins un point associé à une valeur acquise projeté lors de l'étape (105) de projection orthogonale est associé à un enregistrement d'émissions acoustiques acquis lors d'une deuxième étape (107) d'acquisition distincte de la première étape (101) d'acquisition.

7. Procédé (100) selon l'une des revendications précédentes **caractérisé en ce que** chaque état de l'ensemble de batteries peut être associé à une classe d'états parmi une pluralité de classes d'états, **en ce que** chaque enregistrement d'émissions acoustiques acquis lors de la première étape d'acquisition d'une pluralité d'enregistrement d'émissions acoustiques est associé à une classe d'états connue et **en ce que** le procédé comprend en outre une étape de détermination de classe d'états de l'ensemble de batteries par comparaison entre la position de l'image du point associée à l'enregistrement d'émissions acoustiques acquis dans l'espace de projection et la position des points projetés dans ledit espace de projection lors de l'étape de projection non linéaire.

8. Procédé (100) selon la revendication précédente **caractérisé en ce que** la méthode de projection non linéaire utilisée lors de l'étape de projection non linéaire est une méthode de projection non linéaire supervisée.

9. Procédé (200) de détermination de la méthode de projection la plus adaptée à un ensemble de batteries (EB) **caractérisé en ce qu'**il comprend, pour chaque méthode de projection non linéaire d'une pluralité de méthodes de projection non linéaire une étape (201) d'évaluation de ladite méthode comprenant :
- une sous étape de mise en œuvre d'un procédé (100) de détermination de l'état d'un ensemble de batterie (EB) selon la revendication 5, la pluralité d'enregistrement d'émissions acoustiques considérée lors de cette mise en œuvre étant identique pour chaque méthode de projection et l'étape (102) de projection non linéaire étant réalisée à l'aide de la méthode de projection non linéaire considérée ;
- une sous étape d'évaluation de la méthode de projection non linéaire au moyen d'un critère K dont la valeur dépend de la position d'au moins un point image obtenu dans l'espace de projection lors de la mise en œuvre du procédé de détermination de l'état d'un ensemble de batteries ;
et **en ce qu'**il comprend une étape de détermination de la méthode la plus adaptée parmi la pluralité de méthodes de projection selon le critère K.

10. Dispositif de mesure de l'état d'un ensemble de batteries comprenant un moyen de calcul et un ou plusieurs capteurs configurés pour acquérir une pluralité d'enregistrement d'émissions acoustiques émises par l'ensemble de batteries et transmettre lesdits enregistrement d'émissions acoustiques au moyen de calcul, ledit dispositif étant **caractérisé en ce que** le moyen de calcul est configuré pour mettre en œuvre un procédé (100 ,200) selon l'une des revendications précédentes.

## Patentansprüche

1. Verfahren (100) zur Bestimmung des Zustands eines Batteriesatzes (EB) aus einer Vielzahl von Zuständen, wobei das Verfahren umfasst:
- einen Schritt (101) zum Erfassen einer Vielzahl von Aufzeichnungen akustischer Emissionen (EA) des Batteriesatzes (EB), wobei jede Aufzeichnung einem Punkt aus der Vielzahl von Punkten in einem Ursprungsraum und einem bekannten Zustand des Batteriesatzes zugeordnet ist, wobei diese Zuordnung durch Zerlegung der akustischen Emissionen mittels Fourier-Reihen erhalten wird und wobei der Punkt im Ursprungsraum für jede Aufzeichnung durch Koordinaten bestimmt wird, die sich aus den verschiedenen gemessenen Frequenzen und den diesen Frequenzen zugeordneten Amplituden ergeben;
- einen Schritt (102) der nichtlinearen Projektion mindestens eines Teils der den Aufzeichnungen zugeordneten Punkte, der als nichtlinear projizierter Teil bezeichnet wird, in einen Projektionsraum, wobei dieser Projektionsraum eine bijektive Abbildung auf eine Untermannigfaltigkeit des Ursprungsraums bildet und jeder so erhaltene Punkt im Projektionsraum einem bekannten Zustand des Batteriesatzes zugeordnet ist;
wobei das Verfahren **dadurch gekennzeichnet ist, dass** es umfasst:
- einen Schritt (103) zur Erstellung eines ersten Netzes im Projektionsraum, das als Projektionsnetz bezeichnet wird, wobei die Netzpunkte dieses Netzes Simplexe sind;
- einen Schritt (104) zur Erstellung eines zweiten Netzes, das in bijektiver Abbildung zum Projektionsnetz im Ursprungsraum steht und als Ursprungsnetz bezeichnet wird, wobei jede Masche des Projektionsnetzes einer Masche des Ursprungsnetzes zugeordnet ist;
- einen Schritt (105) der orthogonalen Projektion mindestens eines Punktes, der einem erfassten Wert zugeordnet ist, auf das Ursprungsnetz, wobei dieser Punkt nicht zum nichtlinear projizierten Teil gehört;
- einen Schritt (106) zur Bestimmung der Position des Bildpunktes im Projektionsnetz in Abhängigkeit der Position der orthogonalen Projektion dieses Punktes auf dem Ursprungsnetz, um einen Punkt, den sogenannten Bildpunkt, im Projektionsraum zu erhalten, und durch Vergleich der Position dieses Bildpunkts mit den Punkten, die den bekannten Zuständen des Batteriesatzes zugeordnet sind, den Zustand des Batteriesatzes zu bestimmen.

2. Verfahren nach dem vorstehenden Anspruch, **dadurch gekennzeichnet, dass** der Schritt (105) der orthogonalen Projektion eines einem erfassten Wert zugeordneten Punktes auf dem Ursprungsnetz Folgendes umfasst:
- einen Teilschritt (1051) der orthogonalen Projektion dieses Punktes auf jede Masche des Ursprungsnetzes, wobei jede Projektion mit einem Fehler verbunden ist; und
- einen Teilschritt (1052) zur Auswahl der Masche, für die der der Projektion zugeordnete Fehler am geringsten ist und die als Ursprungsmasche bezeichnet wird.

3. Verfahren (100) nach dem vorstehenden Anspruch, **dadurch gekennzeichnet, dass** jede Masche einem Gewichtungskoeffizient zugeordnet ist, wobei der Gewichtungskoeffizient von der Dichte der aus dem Schritt der nichtlinearen Projektion im Projektionsraum stammenden Punkte abhängt, wobei der mit der Projektion in einer Masche verbundene Fehler in dem Teilschritt zur Auswahl der Masche, für die der der mit der Projektion verbundene Fehler am geringsten ist, mit dem dieser Masche zugeordneten Gewichtskoeffizienten gewichtet wird.

4. Verfahren (100) nach einem der beiden vorstehenden Ansprüche, **dadurch gekennzeichnet, dass** der Schritt (106) zur Bestimmung der Bildposition des Punktes, der der im Projektionsnetz erfassten Aufzeichnung akustischer Emissionen zugeordnet ist, umfasst:
- einen Teilschritt (1061) zur Auswahl einer Masche des Projektionsnetzes, die als Projektionsmasche bezeichnet wird, wobei die Projektionsmasche diejenige Masche des Projektionsnetzes ist, die der Ursprungsmasche zugeordnet ist;
- einen Teilschritt (1062) zur Bestimmung der Bildposition des Punktes, der der in der Projektionsmasche erfassten Aufzeichnung akustischer Emissionen zugeordnet ist, wobei diese Bestimmung in Abhängigkeit von der Position der orthogonalen Projektion des Punktes auf die Ursprungsmasche erfolgt.

5. Verfahren (100) nach einem der vorstehenden Ansprüche, **dadurch gekennzeichnet, dass** mindestens ein Punkt, der einer erfassten Aufzeichnung akustischer Emissionen zugeordnet ist und im Schritt der orthogonalen Projektion projiziert wird, aus einem zweiten Teil der Vielzahl von Punkten ausgewählt wird, der sich von dem nichtlinear projizierten Teil unterscheidet.

6. Verfahren (100) nach einem der Ansprüche 1 bis 4, **dadurch gekennzeichnet, dass** mindestens ein Punkt, der einem im Schritt (105) der orthogonalen Projektion projizierten erfassten Wert zugeordnet ist, einer Aufzeichnung akustischer Emissionen zugeordnet ist, die in einem zweiten Erfassungsschritt (107) erfasst wurde, der sich vom ersten Erfassungsschritt (101) unterscheidet.

7. Verfahren (100) nach einem der vorstehenden Ansprüche, **dadurch gekennzeichnet, dass** jeder Zustand des Batteriesatzes einer Zustandsklasse aus einer Vielzahl von Zustandsklassen zugeordnet werden kann, dass jede im ersten Erfassungsschritt einer Vielzahl von Aufzeichnungen akustischer Emissionen erfasste Aufzeichnung akustischer Emissionen einer bekannten Zustandsklasse zugeordnet ist und dass das Verfahren ferner einen Schritt zur Bestimmung der Zustandsklasse des Batteriesatzes durch Vergleich der Position des Bildpunkts umfasst, der der erfassten Aufzeichnung akustischer Emissionen im Projektionsraum zugeordnet ist, mit der Position der Punkte, die in diesem Projektionsraum während des nichtlinearen Projektionsschritts projiziert wurden.

8. Verfahren (100) nach dem vorstehenden Anspruch, **dadurch gekennzeichnet, dass** das im Schritt der nichtlinearen Projektion verwendete nichtlineare Projektionsverfahren ein überwachtes nichtlineares Projektionsverfahren ist.

9. Verfahren (200) zur Bestimmung der für einen Batteriesatz (EB) am besten geeigneten Projektionsmethode, **dadurch gekennzeichnet, dass** es für jede nichtlineare Projektionsmethode aus einer Vielzahl von nichtlinearen Projektionsmethoden einen Schritt (201) zur Bewertung dieser Methode umfasst, der Folgendes umfasst:
- einen Teilschritt zur Durchführung eines Verfahrens (100) zur Bestimmung des Zustands eines Batteriesatzes (EB) nach Anspruch 5, wobei die bei dieser Durchführung berücksichtigte Vielzahl von Aufzeichnungen akustischer Emissionen für jede Projektionsmethode identisch ist und der Schritt (102) der nichtlinearen Projektion unter Verwendung der jeweiligen nichtlinearen Projektionsmethode durchgeführt wird;
- einen Teilschritt zur Bewertung der nichtlinearen Projektionsmethode anhand eines K-Kriteriums, dessen Wert von der Position mindestens eines Bildpunkts abhängt, der bei der Durchführung des Verfahrens zur Bestimmung des Zustands eines Batteriesatzes im Projektionsraum erhalten wurde;
und dass es einen Schritt zur Bestimmung der am besten geeigneten Methode aus der Vielzahl von Projektionsmethoden gemäß dem K-Kriterium umfasst.

10. Vorrichtung zur Messung des Zustands eines Batteriesatzes, umfassend eine Recheneinheit und einen oder mehrere Sensoren, die so ausgelegt sind, dass sie eine Vielzahl von Aufzeichnungen der vom Batteriesatz abgegebenen akustischen Emissionen erfassen und diese Aufzeichnungen der akustischen Emissionen an die Recheneinheit übertragen, wobei die Vorrichtung **dadurch gekennzeichnet ist, dass** die Recheneinheit so ausgelegt ist, dass sie ein Verfahren (100, 200) nach einem der vorstehenden Ansprüche ausführt.

## Claims

1. A method (100) for determining the state of a set of batteries (EB) from a plurality of states, said method comprising:
- A step (101) of acquiring a plurality of records of acoustic emissions (EA) from the set of batteries (EB), each record being associated with a point from the plurality of points in an origin space and with a known state of the set of batteries, said association being obtained by decomposing the acoustic emissions using Fourier series, said point in the origin space being obtained for each record by coordinates given by the different measured frequencies and the amplitudes associated with these frequencies;
- a step (102) of non-linearly projecting at least one part of the points associated with said records, referred to as the non-linearly projected part, into a projection space, this projection space being in bijection with a submanifold of the original space, each point in the projection space thus obtained being associated with a known state of the set of batteries;
the said method being **characterised in that** it includes:
- a step (103) of creating a first meshing in the projection space, referred to as the projection meshing, the meshes of said meshing being simplexes;
- a step (104) of creating a second meshing in bijection with the projection meshing in the original space, referred to as the original meshing, each mesh in the projection meshing being associated with a mesh in the original meshing;
- a step (105) of orthogonally projecting onto the original meshing at least one point associated with a value acquired, said point not belonging to the non-linearly projected part;
- a step (106) of determining the position of the image of said point in the projection meshing as a function of the position of the orthogonal projection of said point onto the original meshing, so as to obtain a point, referred to as the image point, in the projection space and, by comparing the position of this image point with the points associated with the known states of the set of batteries, thereby determine the state of the set of batteries.

2. The method according to the preceding claim, **characterised in that** the step (105) of orthogonally projecting a point associated with a value acquired onto the original meshing comprises:
- a sub-step (1051) of orthogonally projecting said point onto each mesh of the original meshing, each projection being associated with an error; and
- a sub-step (1052) of selecting the mesh for which the error associated with the projection is the smallest, referred to as the original mesh.

3. The method (100) according to the preceding claim, **characterised in that** each mesh is associated with a weighting coefficient, said weighting coefficient being a function of the density of the points derived from the non-linear projection step in the projection space, the error associated with the projection in a mesh being weighted by the weighting coefficient associated with said mesh during the sub-step of selecting the mesh for which the error associated with the projection is the smallest.

4. The method (100) according to one of the two preceding claims, **characterised in that** the step (106) of determining the position of the image of the point associated with the record of acoustic emissions acquired in the projection meshing comprises:
- a sub-step (1061) of selecting a mesh from the projection meshing, referred to as the projection mesh, said projection mesh being the mesh of the projection meshing associated with the original mesh;
- a sub-step (1062) of determining the position of the image of the point associated with the record of acoustic emissions acquired in the projection mesh, said determining being carried out as a function of the position of the orthogonal projection of said point onto the original mesh.

5. The method (100) according to one of the preceding claims, **characterised in that** at least one point associated with a record of acoustic emissions acquired projected during the orthogonal projection step is selected from a second part of the plurality of points, distinct from the non-linearly projected part.

6. The method (100) according to any one of claims 1 to 4, **characterised in that** at least one point associated with an acquired value projected during the orthogonal projection step (105) is associated with a record of acoustic emissions acquired during a second acquisition step (107) distinct from the first acquisition step (101).

7. The method (100) according to one of the preceding claims, **characterised in that** each state of the set of batteries can be associated with a state class from among a plurality of state classes, **in that** each record of acoustic emissions acquired during the first step of acquiring a plurality of records of acoustic emissions is associated with a known state class and **in that** the method further comprises a step of determining state class of the set of batteries by comparing the position of the image of the point associated with the record of acoustic emissions acquired in the projection space with the position of the points projected into said projection space during the non-linear projection step.

8. The method (100) according to the preceding claim, **characterised in that** the non-linear projection method used during the non-linear projection step is a supervised non-linear projection method.

9. A method (200) for determining the most suitable projection method for a set of batteries (EB), **characterised in that** it comprises, for each non-linear projection method from a plurality of non-linear projection methods, a step (201) of evaluating said method, comprising:
- a sub-step of implementing a method (100) for determining the state of a set of batteries (EB) according to claim 5, the plurality of records of acoustic emissions considered during this implementation being identical for each projection method, and the non-linear projection step (102) being performed using the non-linear projection method in question;
- a sub-step of evaluating the non-linear projection method by means of a criterion K, the value of which depends on the position of at least one image point obtained in the projection space during the implementation of the method for determining the state of a set of batteries;
and **in that** it comprises a step of determining the most suitable method from among the plurality of projection methods according to criterion K.

10. A device for measuring the state of a set of batteries, comprising a calculation means and one or more sensors configured to acquire a plurality of records of acoustic emissions emitted by the set of batteries and to transmit said records of acoustic emissions to the calculation means, said device being **characterised in that** the calculation means is configured to implement a method (100, 200) according to one of the preceding claims.
